# EUROPÄISCHE PATENTSCHRIFT

(11) **EP 0 386 484 B1**
(45) Veröffentlichungstag und Bekanntmachung des Hinweises auf die Patenterteilung: **27.04.1994**
(21) Anmeldenummer: 90102417.4
(22) Anmeldetag: 07.02.1990
(51) Int. Cl.: B29C 47/92, B29C 47/88, B29C 47/14, B29C 47/20, B29D 7/00, B29D 23/00

(54) **Verfahren zum Überprüfen der Funktionsfähigkeit von mit Kühlabschnitten versehenen Extrusionsdüsen von Kunststoffextrudern zur Herstellung von Flach- oder Schlauchfolien**
Method for controlling the functional capability of the plastics extruder nozzles provided with cooling sections for manufacturing flat or tubular films
Procédé pour contrôler le fonctionnement de buses à extrusion munies de segments de réfrigération, sur des extrudeuses de matière plastique pour la fabrication de feuilles planes ou tubulaires

(30) Priorität: 06.03.1989 DE 3907180
(43) Veröffentlichungstag der Anmeldung: 12.09.1990
(73) Patentinhaber: Windmöller & Hölscher, D-49525 Lengerich (DE)
(72) Erfinder: Saatkamp, Richard, Dipl.-Ing., D-4540 Lengerich (DE); Borgmann, Dieter, D-4532 Mettingen (DE)
(74) Vertreter: Gossel, Hans K., Dipl.-Ing.

## Beschreibung

Die Erfindung betrifft zunächst ein Verfahren zum Überprüfen der Funktionsfähigkeit der mit Kühlluftzuführungs- und Kühlluftabführungsleitungen versehenen Kühlabschnitte einer Breitschlitzdüse eines Extruders zur Herstellung von Flachfolien aus thermoplastischem Material, bei dem die Kühlluftzuführungsleitungen durch von einer elektronischen Recheneinheit gesteuerte Magnetventile bedarfsweise mit einer zentralen unter Überdruck stehenden Kühlluftspeiseleitung verbunden werden.

Zum anderen betrifft die Erfindung ein Verfahren zum Überprüfen der Funktionsfähigkeit der mit Kühlluftzuführungs- und Kühlluftabführungsleitungen versehenen Kühlabschnitte einer Ringdüse eines Blasfolienextruders zur Herstellung von Schlauchfolien aus thermoplastischem Kunststoff, bei dem die Kühlluftzuführungsleitungen durch von einer Recheneinheit gesteuerte Magnetventile bedarfsweise mit einer zentralen unter Überdruck stehenden Kühlluftspeiseleitung verbunden werden.

Zur Herstellung von Flachfolien und von im Blasverfahren hergestellten Schlauchfolien ist es bekannt, die Breitschlitzdüse oder die Ringdüse mit Kühlabschnitten zu versehen, die bei gemessenen Abweichungen der Dicken der extrudierten Folien von der mittleren Foliendicke zeitweilig mit Kühlluft beaufschlagt werden, um eine gleichmäßige Dickenverteilung der extrudierten Folie über ihre Breite oder ihren Umfang zu erhalten. Dabei werden bei der Herstellung von Flachfolien Düsenabschnitte, aus denen Dickstellen extrudiert worden sind, gekühlt, während bei der Herstellung von Schlauchfolien im Blasverfahren Abschnitte der ringförmigen Extrusionsdüse, aus denen nach dem Aufblasen sich ergebende Dünnstellen extrudiert worden sind, zumindest vorübergehend gekühlt werden. Hierbei handelt es sich um bekannte Regelungsverfahren zur Herstellung von Flach- und Schlauchfolien mit guter mittlerer Dickenverteilung.

Sowohl die Breitschlitzdüsen zur Herstellung von Flachfolien als auch die Ringdüsen zur Herstellung von Blasfolien sind in zahlreiche Kühlabschnitte unterteilt, die einzeln mit Kühlluft im Bedarfsfalle beaufschlagt werden müssen, so daß die Gefahr besteht, daß es bei einzelnen oder mehreren Kühlabschnitten zu Störungen kommen kann und eine einwandfreie Funktion der einzelnen Kühlabschnitte nicht mehr gewährleistet ist. Bisher konnten Störungen an einzelnen Kühlabschnitten erst erkannt werden, wenn bemerkt wurde, daß die Regelung versagte. Darüber hinaus ist es üblich, daß der Maschinist mit der Hand die Schläuche abtastet, die von den einzelnen Magnetventilen zur Breitschlitzdüse oder zu dem Blaskopf führen, um die Funktion der Magnetventile zu überprüfen. Da die Zuführungsschläuche relativ dünnwandig sind, entsteht bei der Ansteuerung eines Ventils eine leichte Ausbauchung im Bereich der Zuführungsschläuche, die ertastet werden kann. Da jedoch einige Ventile unter Umständen sehr häufig und andere dafür kaum angesteuert werden, ist die von dem Maschinisten manuell durchgeführte Überprüfung nur sehr ungenau und darüber hinaus mit viel Zeitaufwand verbunden.

Aufgabe der Erfindung ist es daher, ein Verfahren vorzuschlagen, nach dem sich die Funktionsfähigkeit der Kühlabschnitte von Breitschlitzdüsen und Ringdüsen von Extrudern zur Herstellung von Kunststoffolien in einfacher Weise zuverlässig überprüfen läßt.

Erfindungsgemäß wird diese Aufgabe bei einem Verfahren zum Überprüfen der Funktionsfähigkeit der Kühlabschnitte einer Breitschlitzdüse der eingangs angegebenen Art dadurch gelöst, daß aufgrund eines Prüfprogramms die Kühlluftspeiseleitung von den zu den einzelnen Magnetventilen führenden Zweigleitungen bei geschlossenen Magnetventilen durch ein Abwehrventil geschlossen wird, daß sodann durch einen in der Kühlluftspeiseleitung hinter dem Absperrventil befindlichen Druckfühler der Druck und der Druckabfall in der Kühlluftspeiseleitung gemessen wird, der sich bei der Öffnung des Magnetventils des ersten zu prüfenden Kühlabschnitts ergibt, daß ein Fehlersignal erzeugt wird, wenn der Druck und der gemessene Druckabfall nicht den typischen Werten für die ordnungsgemäßen Funktionen der Kühlluftspeiseleitung und des geprüften Kühlabschnitts entsprechen und daß nachfolgend der Reihe nach sämtliche Kühlabschnitte durch Schließen sämtlicher Magnetventile und Schließen des Absperrventils und durch nachfolgendes Öffnen des Magnetventils nur des jeweils zu prüfenden Kühlabschnitts während des Prüfintervalls geprüft werden. Das erfindungsgemäße Prüfprogramm läßt sich in einfacher Weise durch ein besonderes Rechnerprogramm steuern. Da die rechnergesteuerte Durchführung des Prüfprogramms in relativ kurzer Zeit durchführbar ist, wird durch den Ablauf des Prüfprogramms die laufende Produktion nicht gestört. Das Prüfprogramm kann in geeigneten Zeitabschnitten, beispielsweise nach jeweils etwa 2 Stunden, durchgeführt werden.

Durch das erfindungsgemäße Prüfprogramm wird zunächst nach Sperrung des Absperrventils geprüft, ob die Kühlluftspeiseleitung und die von dieser abzweigenden Kühlluftzuführungsleitungen sowie die die einzelnen Kühlluftzuführungsleitungen steuernden Magnetventile dicht sind. Eine Undichtigkeit würde sich durch einen vorzeitigen entsprechenden Druckabfall bemerkbar machen. Bei der anschließenden Öffnung des Magnetventils zur Funktionsprüfung eines Kühlabschnitts läßt sich durch den gemessenen Druckabfall feststellen, ob dieser einwandfrei funktioniert.

Durch den Druckfühler, der dem gemessenen Druckabfall entsprechende Signale dem Rechner zuführt, läßt sich der Druckabfall über die Zeit ermitteln, die dann mit gespeicherten Werten, die typisch für eine ordnungsgemäße Funktion sind, verglichen werden können.

Als Druckfühler können Drucksensoren oder Druckschalter verwendet werden, die eine genügend genaue Erfassung des Druckabfalls zulassen.

Bei einem Verfahren zum Überprüfen der Funktionsfähigkeit der Kühlabschnitte einer Ringdüse der eingangs angegebenen Art wird die gestellte Aufgabe erfindungsgemäß dadurch gelöst, daß aufgrund eines Prüfprogramms ein jeder Kühlluftabführungsleitung oder sämtlichen Kühlluftabführungsleitungen zugeordnetes Entlüftungsventil geschlossen und das Magnetventil des zu prüfenden Kühlabschnitts geöffnet wird, daß ein mit der Kühlluft abführungsleitung des zu prüfenden Kühlabschnitts verbundener Druckfühler den Druckanstieg in dieser mißt und ein Fehlersignal erzeugt wird, wenn der gemessene Druckanstieg nicht typisch ist für eine ordnungsgemäße Funktion des geprüften Kühlabschnitts und der zugehörigen Kühlluftzuführungs- und Kühlluftabführungsleitungen, und daß anschließend der Reihe nach nach vorheriger Entlüftung der Kühlluftabführungsleitungen sämtliche Magnetventile geöffnet und die zugehörigen Kühlabschnitte aufgrund des gemessenen Druckanstiegs in der Kühlluftabführungsleitung einer Funktionsprüfung unterzogen werden. Nach der zweiten erfindungsgemäßen Lösung wird im Gegensatz zu der ersten nicht der Druckabfall in einem abgesperrten Teil der Kühlluftspeiseleitung nach Öffnung eines Magnetventils, sondern der Druckanstieg gemessen, der sich in der zuvor entlüfteten und anschließend geschlossenen Kühlluftabführungsleitung nach Öffnung des den zugehörigen Kühlabschnitt mit Kühlluft speisenden Magnetventils ergibt.

Beide zuvor beschriebenen erfindungsgemäßen Lösungen lassen sich nach entsprechender Anpassung zur Funktionsprüfung der Kühlabschnitte sowohl von Breitschlitzdüsen als auch von Ringdüsen verwenden. Die beiden erfindungsgemäßen Lösungen sind lediglich anhand einer Breitschlitzdüse und einer Rindüse beschrieben worden, obwohl sie untereinander auch austauschbar sind.

Ausführungsbeispiele der Erfindung werden nachstehend anhand der Zeichnung näher erläutert. In dieser zeigt
- Fig.1: eine schematische Darstellung einer Breitschlitzdüse mit einer Einrichtung zur Prüfung der Funktion von deren Kühlabschnitten und
- Fig.2: eine schematische Darstellung einer Ringdüse mit einer Einrichtung zur Uberprüfung der ordnungsgemäßen Funktion von deren Kühlabschnitten.

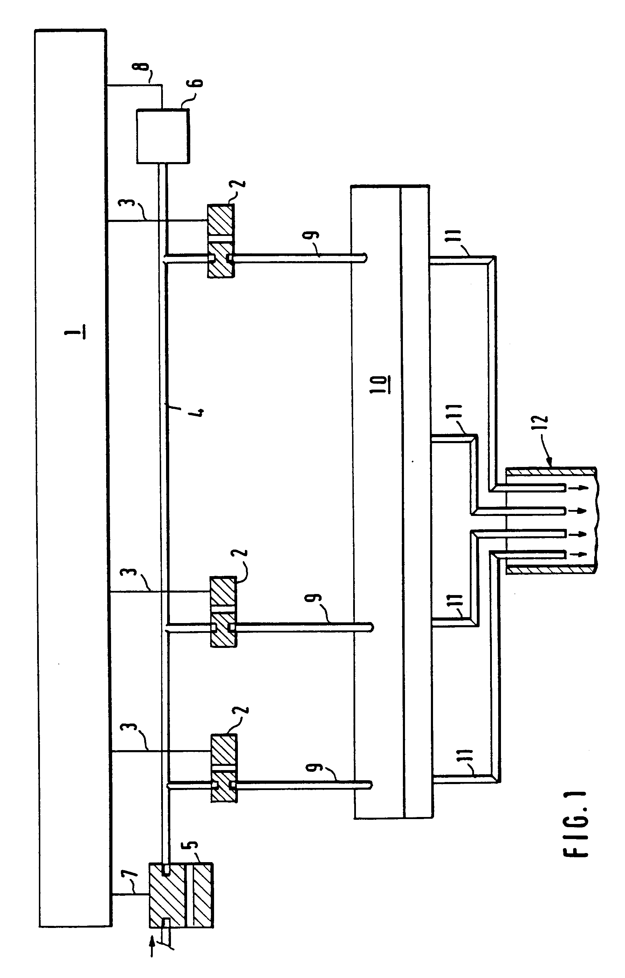

Nach Fig.1 ist eine elektronische Recheneinheit 1 seriell über Steuerleitungen 3 mit Magnetventilen 2 verbunden. Bei üblichen Ausführungsformen von Breitschlitzdüsen sind 132 Kühlabschnitte und entsprechend 132 Magnetventile 2 vorhanden.

Alle Ventile 2 stehen mit einer Druckluftleitung 4 in Verbindung, die auf der Zuluftseite in ein Steuerventil und auf der Abluftseite in einen Druckschalter 6 mündet. Sowohl Steuerventil 5 als auch Druckschalter 6 sind über Steuerleitungen 7 und 8 mit dem Rechner 1 verbunden. Der Rechner 1 ist in bekannter Weise derart programmiert, daß er in Abhängigkeit von den dem Rechner zugeführten Dickenabweichungswerten in der Folie die einzelnen Magnetventile 2 ansteuert und über Leitungen 9 Kühlluft in den Breitschlitzdüsenkopf 10 an den entsprechenden Stellen einbläst. Diese Kühlluft wir über Abluftleitungen 11 und einem allen Leitungen 11 gemeinsamen Abluftkanal 12 an die Atmosphäre abgegeben.

Neben diesem bekannten Programm ist der Rechner 1 weiterhin derart programmiert, daß die Dickenregelung turnusmäßig, beispielsweise im Abstand von zwei Stunden, außer Kraft gesetzt wird und statt dessen ein Programm abläuft, durch das alle 132 Leitungen 3 und damit in zeitlichen kurzen Abständen hintereinander auch alle Magnetventile 2 der Reihe nach beaufschlagt werden. Dies bedeutet, daß über die Leitung 7 das Steuerventil 5 kurzzeitig geöffnet wird, wodurch Luft mit einem Druck von ca. 2 bar in die Leitung 4 gelangen kann. Dieser Druck wird vom Druckschalter 6 registriert. Daraufhin wird das aus der Zeichnung auf der linken Seite ersichtliche erste Magnetventil über die Schaltleitung 3 geöffnet. so daß der Druckschalter 6 einen Druckabfall in der Leitung 4 registriert. Dies bedeutet, daß das gerade geprüfte Magnetventil ordnungsgemäß funktioniert. Dieser zuvor beschriebene Zyklus wiederholt sich für alle 132 Magnetventile. Die Praxis hat gezeigt, daß die dabei stattfindende kurzzeitige Abkühlung aller Bereiche des Breitschlitzdüsenkopfes 10 nacheinander keinen Einfluß auf die Qualität der Flachfolie hat. Nachdem der gesamte Prüfvorgang für die Magnetventile 2 stattgefunden hat, fährt der Rechner 1 wieder mit seinem Normalprogramm, das heißt mit seinem Programm zur Regelung der Foliendicke der extrudierten Flachfolie.

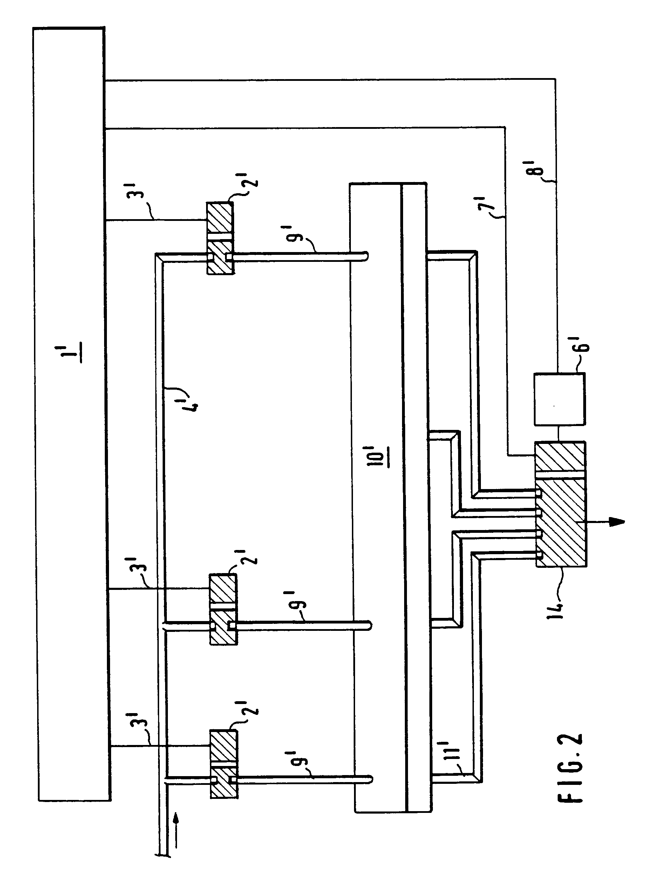

Die in Figur 2 dargestellte Schaltung dient zur Überprüfung der Magnetventile 2′ bei Schlauchfolienextrudern, wobei gleichzeitig auch die Dichtigkeit der flexiblen Leitungen 9′ überprüft wird. Zu diesem Zweck ist die Leitung 4′ ständig mit einem Luftdruck von 2 bar beaufschlagt, der an allen 132 verwendeten Magnetventilen 2′ ständig ansteht. Die Magnetventile 2′ sind über Steuerleitungen 3′ mit einem Rechner 1′ verbunden. Weiterhin gehen von den Magnetventilen 2′ flexible Leitungen 9′ aus, die zum Blaskopf 10′ führen. Über diese flexiblen Leitungen 9′ kann dem Blaskopf 10′ bereichsweise kühle Luft zugeführt werden, die über Abluftleitungen 11′ einem Hauptventil 14 zugeführt wird, welches im normalen Regelbetrieb ständig geöffnet das heißt mit der Atmosphäre verbunden ist. Die Steuerung dieses Hauptventils 14 geschieht über eine mit dem Rechner 1′ verbundene Steuerleitung 7′. Mit dem Hauptventil 14 ist ein Druckschalter 6′ verbunden, der über eine Steuerleitung mit dem Rechner 6′ verbunden ist.

Ebenso wie beim Ausführungsbeispiel nach Fig.1 weist der Rechner 1′ neben seinem normalen Programm zum Regeln der Foliendicke ein Prüfprogramm auf, welches wie beim Ausführungsbeispiel nach Fig.1 beispielsweise alle zwei Stunden den Dickenregelkreis ausschaltet. Statt dessen arbeitet der Rechner 1′ kurzzeitig mit einem Prüfprogramm. Dieses Prüfprogramm besagt, daß zunächst das erste in der Figur 2 auf der linken Seite dargestellte Magnetventil 2′ geöffnet und das Hauptventil 14 geschlossen wird. Hierdurch baut sich bei funktionierendem Magnetventil 2′ in der Leitung 9′, dem Folienblaskopf 10′ und der Leitung 11 ein Druck von 2 bar auf, der von dem Druckschalter 6′ registriert wird. Über die Leitung 8′ wird dieser registrierte Druck dem Rechner 1′ zugeführt, der den dieses erste überprüfte Magnetventil 2′ mit der zugehörigen Leitung 9′ als funktionsfähig registriert und das erste überprüfte Magnetventil 2′ schließt sowie das Hauptventil kurzzeitig lüftet. Dieser beschriebene Vorgang wiederholt sich dann für alle 132 eingesetzten Magnetventile 2′. Nach Ablauf dieser Magnetventilüberprüfung geht der Rechner 1′ dann wieder zu seinem normalen Foliendickenregelprogramm über.

## Patentansprüche

1. Verfahren zum Überprüfen der Funktionsfähigkeit der mit Kühlluftzuführungs- und Kühlluftabführungsleitungen versehenen Kühlabschnitte einer Breitschlitzdüse eines Extruders zur Herstellung von Flachfolien aus thermoplastischem Kunststoff, bei dem die Kühlluftzuführungsleitungen durch von einer elektronischen Recheneinheit gesteuerte Magnetventile bedarfsweise mit einer zentralen unter Überdruck stehenden Kühlluftspeiseleitung verbunden werden
**dadurch gekennzeichnet,**
daß aufgrund eines Prüfprogramms die Kühlluftspeiseleitung vor den zu den einzelnen Magntetventilen führenden Zweigleitungen bei geschlossenen Magnetventilen durch ein Absperrventil geschlossen wird, daß sodann durch einen in der Kühlluftspeiseleitung hinter dem Absperrventil befindlichen Druckfühler der Druck und der Druckabfall in der Kühlluftspeiseleitung gemessen wird, der sich bei der Öffnung des Magnetventils des ersten zur prüfenden Kühlabschnitts ergibt,
daß ein Fehlersignal erzeugt wird, wenn der Druck und der gemessene Druckabfall nicht den typischen Werten für die ordnungsgemäßen Funktionen der Kühlluftspeiseleitung und des geprüften Kühlabschnitts entsprechen, und
daß nachfolgend der Reihe nach sämtliche Kühlabschnitte durch Schließen sämtlicher Magnetventile und Schließen des Magnetventils und nachfolgendes Öffnen des Magnetventils nur des jeweils zu prüfenden Kühlabschnitts während des Prüfintervalls geprüft werden.

2. Verfahren zum Überprüfen der Funktionsfähigkeit der mit Kühlluftzuführungs- und Kühlluftabführungsleitungen versehenen Kühlabschnitte einer Ringdüse eines Blasfolienextruders zur Herstellung von Schlauchfolien aus thermoplastischem Kunststoff, bei dem die Kühlluftzuführungsleitungen durch von einer elektronischen Recheneinheit gesteuerte Magnetventile bedarfsweise mit einer zentralen unter Überdruck stehenden Kühlluftspeiseleitung verbunden werden,
**dadurch gekennzeichnet,**
daß aufgrund eines Prüfprogramms ein jeder Kühlluftabführungsleitung oder sämtlichen Kühlluftabführungsleitungen zugeordnetes Entlüftungsventil geschlossen und das Magnetventil des zu prüfenden Kühlabschnitts geöffnet wird, daß ein mit der Kühlluftabführungsleitung des zu prüfenden Kühlabschnitts verbundener Druckfühler den Druckanstieg in dieser Kühlluftabführungsleitung mißt und ein Fehlersignal erzeugt wird, wenn der gemessene Druckanstieg nicht typisch ist für eine ordnungsgemäße Funktion des geprüften Kühlabschnitts und der zugehörigen Kühlluftzuführungs- und Kühlluftabführungsleitungen, und daß anschließend der Reihe nach nach vorheriger Entlüftung der Kühlluftabführungsleitungen sämtliche Magnetventile geöffnet und die zugehörigen Kühlabschnitte aufgrund des jeweils in der dieser zugehörigen Kühlluftabführungsleitung gemessenen Druckanstiegs einer Funktionsprüfung unterzogen werden.

## Claims

1. Method for testing the functionality of the cooling sections, provided with cooling-air supply lines and cooling-air removal lines, of a slit die of an extruder for producing flat films from thermoplastic, in which method solenoid valves controlled by an electronic computer unit connect, when required, the cooling-air supply lines to a central cooling-air feedline under superatmospheric pressure; characterized in that, governed by a test program, a shut-off valve closes the cooling-air feedline upstream of the branch lines leading to the individual solenoid valves when the solenoid valves are closed; in that then the pressure and the pressure drop, which results when the solenoid valve of the first cooling section to be tested is opened, in the cooling-air feedline are measured by a pressure sensor located in the cooling-air feedline downstream of the shut-off valve; in that a fault signal is generated when the pressure and the measured pressure drop do not correspond to the typical values for the correct functions of the cooling-air feedline and the tested cooling section; and in that subsequently all cooling sections are tested in sequence by closing all solenoid valves and closing the solenoid valve and subsequently opening the solenoid valve only of the respective cooling section to be tested, during the test interval.

2. Method for testing the functionality of the cooling sections, provided with cooling-air supply lines and cooling-air removal lines, of an annular die of a blown film extruder for producing tubular films from thermoplastic, in which method solenoid valves controlled by an electronic computer unit connect, when required, the cooling-air supply lines to a central cooling-air feedline under superatmospheric pressure; characterized in that, governed by a test program, a vent valve allocated to each cooling-air removal line or to all cooling-air removal lines is closed and the solenoid valve of the cooling section to be tested is opened; in that a pressure sensor connected to the cooling-air removal line of the cooling section to be tested measures the pressure increase in this cooling-air removal line and a fault signal is generated when the pressure rise measured is not typical for a correct function of the cooling section tested and the associated cooling-air supply lines and cooling-air removal lines; and in that subsequently, after previous venting of the cooling-air removal lines, all solenoid valves are opened in sequence and the associated cooling sections are subjected to a function test on the basis of the pressure rise measured respectively in the cooling-air removal line associated with these cooling sections.

## Revendications

1. Procédé pour contrôler le fonctionnement des segments de refroidissement pourvus de conduits d'amenée et d'évacuation d'air de refroidissement d'une filière plate d'une extrudeuse pour fabriquer des feuilles planes en matière thermoplastique, dans lequel les conduits d'amenée d'air de refroidissement sont reliés par des vannes magnétiques commandées par une unité de calcul électronique selon le besoin à un conduit d'alimentation en air de refroidissement central mis en surpression, caractérisé en ce que, sur la base d'un programme de contrôle, le conduit d'alimentation en air de refroidissement est fermé devant les conduits de branchement menant vers les différentes vannes magnétiques, les vannes magnétiques étant fermées, par une vanne d'arrêt, qu'un capteur de pression se trouvant dans le conduit d'alimentation en air de refroidissement derrière la vanne d'arrêt mesure la pression et la chute de pression dans le conduit d'alimentation en air de refroidissement qu'on obtient lorsqu'on ouvre la vanne magnétique du premier segment de refroidissement à contrôler, en ce qu'un signal d'erreur est produit lorsque la pression et la chute de pression mesurées ne correspondent pas aux valeurs typiques des fonctions appropriées du conduit d'alimentation en air de refroidissement et du segment de refroidissement contrôlé, et qu'on contrôle ensuite les uns après les autres, tous les segments de refroidissement en fermant toutes les vannes magnétiques et en fermant la vanne magnétique et en ouvrant ensuite la vanne magnétique seulement du segment de refroidissement respectif à contrôler pendant l'intervalle de vérification.

2. Procédé pour contrôler le fonctionnement des segments de refroidissement pourvus de conduits d'amenée et d'évacuation d'air de refroidissement d'une filière annulaire d'une extrudeuse de lamelles de soufflage pour la fabrication de feuilles tubulaires en matière thermoplastique, dans lequel les conduits d'amenée d'air de refroidissement sont reliés par des vannes magnétiques commandées par une unité de calcul électronique selon le besoin à un conduit d'alimentation en air de refroidissement central mis en surpression, caractérisé en ce que, sur la base d'un programme de contrôle, on ferme une vanne d'aération associée à chaque conduit d'évacuation d'air de refroidissement ou à tous les conduits d'évacuation d'air de refroidissement et qu'on ouvre la vanne magnétique du segment de refroidissement à contrôler, qu'un capteur de pression relié au conduit d'évacuation d'air de refroidissement du segment de refroidissement à contrôler mesure la montée de pression dans ce conduit d'évacuation d'air de refroidissement et qu'un signal d'erreur est produit lorsque la montée de pression mesurée n'est pas typique pour un fonctionnement approprié du segment de refroidissement contrôlé et des conduits d'amenée et d'évacuation d'air de refroidissement associés, et qu'on ouvre ensuite les unes après les autres, après une aération préalable des conduits d'évacuation d'air de refroidissement, toutes les vannes magnétiques et que les segments de refroidissement associés, sur la base de la montée de pression mesurée respectivement dans ce conduit d'évacuation d'air de refroidissement associé, sont soumis à un contrôle de fonctionnement.
